# EUROPÄISCHE PATENTSCHRIFT

(11) **EP 1 573 178 B1**
(45) Veröffentlichungstag und Bekanntmachung des Hinweises auf die Patenterteilung: **19.05.2010**
(21) Anmeldenummer: 03758052.9
(22) Anmeldetag: 24.10.2003
(51) Int. Cl.: F01L 13/02, F01L 1/356

(54) **VERFAHREN ZUM VERÄNDERN DER VENTILSTEUERZEITEN EINER BRENNKR AFTMASCHINE**
METHOD FOR VARYING VALVE TIMING OF AN INTERNAL COMBUSTION ENGINE
PROCEDE POUR FAIRE VARIER LES TEMPS DE DISTRIBUTION D'UN MOTEUR A COMBUSTION INTERNE

(30) Priorität: 13.12.2002 DE 10258249
(43) Veröffentlichungstag der Anmeldung: 14.09.2005
(73) Patentinhaber: Dr. Ing. h.c. F. Porsche AG, 70435 Stuttgart (DE)
(72) Erfinder: SCHWARZENTHAL, Dietmar, 71254 Ditzingen (DE)
(86) Internationale Anmeldenummer: PCT/EP2003/011782
(87) Internationale Veröffentlichungsnummer: WO 2004/055336

(56) Entgegenhaltungen:
- EP-A- 0 317 372
- DE-A- 3 901 721
- DE-A- 19 606 054
- DE-A- 19 608 533
- DE-A- 19 855 984
- GB-A- 2 246 831
- US-A- 5 398 502
- US-A- 5 427 078
- PATENT ABSTRACTS OF JAPAN Bd. 2000, Nr. 05, 14. September 2000 (2000-09-14) & JP 2000 054847 A (HONDA MOTOR CO LTD), 22. Februar 2000 (2000-02-22)

## Beschreibung

Die Erfindung betrifft ein Verfahren zum Verändern der Ventilsteuerzeiten einer Brennkraftmaschine nach dem Oberbegriff des Anspruchs 1.

Zur Veränderung der Steuerzeiten der Ein- bzw. Auslassventile einer Brennkraftmaschine ist es bekannt, durch eine Nockenwellenverstellung die Position der Einlassnockenwelle zur Auslassnockenwelle zu verändern. Dadurch werden die Öffnungs- und Schließzeiten der Einlassventile durch zwei Einlasssteuerzeiten und die Ventilüberschneidung in bestimmten Drehzahlbereichen angepasst, während Ventilöffnungsdauer und Ventilhub unverändert bleiben (siehe z. B. DE 38 76 762). Darüber hinaus sind aus dem Stand der Technik variable Ventiltriebe bekannt, bei denen sowohl die Ventilöffnungszeiten als auch der Ventilöffnungsquerschnitt dem Betriebszustand des Motors angepasst werden. So ist beispielsweise aus der DE 196 06 054 C2 ein variabler Ventiltrieb einer Brennkraftmaschine bekannt, bei dem mit Hilfe eines schaltbaren Tassenstößels der Ventilhub zweistufig einstellbar ist. Ergänzt wird die Vorrichtung durch eine Einrichtung zum Verstellen der Ein- und Auslasszeiten der Gaswechselventile, wodurch u. a. die Zylinderfüllung über einen großen Drehzahlbereich verbessert werden kann. Auch die Druckschrift GB 2 246 831 offenbart eine Vorrichtung zum Verstellen der Ein- und Auslasszeiten von Gaswechselventilen.

Aufgabe der Erfindung ist es, die Funktionalität eines Nockenwellenverstellers dahingehend zu erweitern, dass neben der Verstellung der Ventilsteuerzeiten durch ein "Verschieben" der Ventilhubkurve in Richtung Einlass oder Auslass öffnet "früh" bzw. "spät" auch eine Veränderung der Ventilöffnungsdauer erreichbar ist.

Die Aufgabe wird erfindungsgemäß durch die Merkmale des Anspruchs 1 gelöst.

Zur Verkürzung der Ventilöffnungsdauer wird erfindungsgemäß vorgeschlagen, während eines Ventilhubs die Nockenwell positiv zu Beschleunigen, während in der daran sich anschließenden Grundkreisphase des betreffenden Nockens eine Verstellung bzw. Korrektur der Nockenwelle erfolgt, indem die Nockenwelle negativ Beschleunigt wird. Um die Ventilöffnungsdauer, die durch die Nockenform vorgegeben ist, zu verlängern, wird vorgeschlagen, während eines Ventilhubs die Nockenwelle negativ zu Beschleunigen, während in der sich daran anschließenden Grundkreisphase des betreffenden Nockens eine Verstellung bzw. Korrektur der Nockenwelle erfolgt indem die Nockenwelle positiv Beschleunigt wird. Durch diese Maßnahmen ist auf vorteilhafte Art und Weise die Ventilöffnungsdauer einstellbar; damit wird lediglich durch den Einsatz eines Nockenwellenverstellers eine Funktionalität erreicht, die ansonsten nur beim Einsatz variabler Ventiltriebsysteme möglich ist.

Durch die in den Unteransprüchen angegebenen Merkmale sind vorteilhafte Weiterbildungen der Erfindung möglich.

Das erfindungsgemäße Verfahren zum Verändern der Ventilsteuerzeiten eignet sich besonders bei einem zweireihigen 6 - Zylinder - Motor mit einer symmetrischen Zündfolge pro Zylinderbank, da hier eine gleichmäßige Aufteilung von Ventilhub und Grundkreisphasen auf der Nockenwelle vorhanden ist.

Das erfindungsgemäße Regelverfahren ist darüber hinaus besonders für die Kombination mit einem variablen Ventiltrieb, bei dem eine Ventilhubumschaltung erfolgt, geeignet, da beispielsweise bei der in der DE 196 06 054 C2 dargestellten zweistufigen Ventilhubumschaltung bei kleinen Ventilhüben die Grundkreisphase der betreffenden Nocken besonders lang ist.

Ein Ausführungsbeispiel der Erfindung ist in der nachfolgenden Beschreibung und Zeichnung näher erläutert.

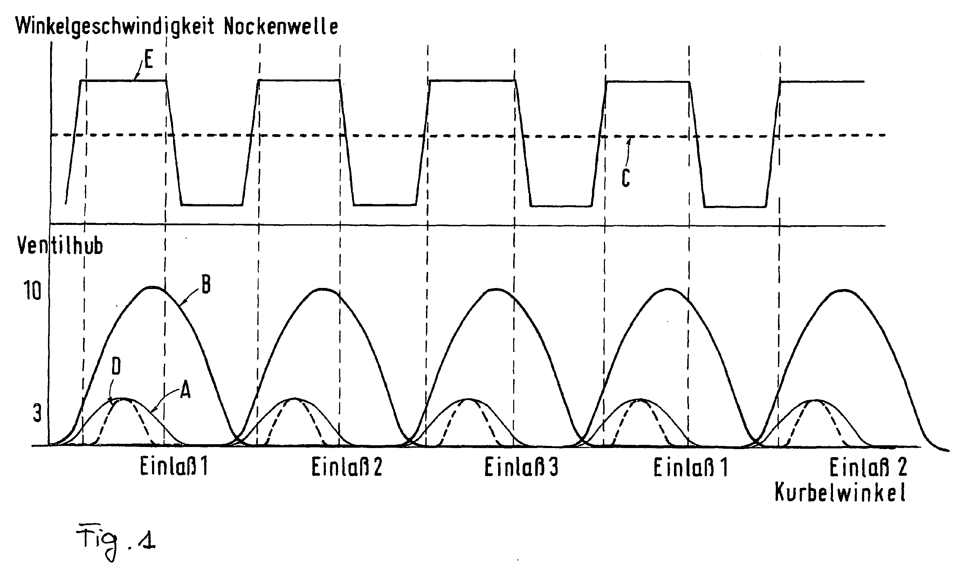

Die einzige Figur zeigt ein Diagramm, bei dem der Ventilhub auf der Einlassseite der Brennkraftmaschine sowie die Winkelgeschwindigkeit der Nockenwelle dargestellt ist.

Das erfindungsgemäße Regelverfahren wird nachfolgend anhand eines 6 - Zylinder - Boxermotors beschrieben, dessen beiden Nockenwellen auf der Einlassseite mit einem Nockenwellenversteller sowie einer zweistufigen Ventilhubumschaltung versehen sind. Derartige Brennkraftmaschinen sind bei der Firma Porsche unter der Modellreihe 996 mit "VarioCamPlus - System" bekannt, so dass Aufbau und Funktionsweise dieses variablen Ventiltriebs nicht näher beschrieben ist. Mit Hilfe des hydraulisch betätigbaren Nockenwellenverstellers sind die Ventilsteuerzeiten auf der Einlassseite kontinuierlich veränderbar, während durch die zweistufige Ventilhubumschaltung, wie im Diagramm dargestellt, mit einem kleinen Nocken eine Ventilhubkurve A und einem großen Nocken eine Ventilhubkurve B umsetzbar ist. Die Ventilsteuerzeiten sowie der Ventilhub werden in Abhängigkeit von Betriebsparametern der Brennkraftmaschine, wie z. B. Last oder Drehzahl gesteuert. Ein mögliches Schaltkennfeld eines Ventiltriebes, in dem die unterschiedlichen Betriebsmodi des Ventiltriebes in Abhängigkeit von Drehzahl und Last der Brennkraftmaschine aufgetragen sind, ist beispielsweise in der DE 196 06 054 C2 dargestellt und beschrieben. Solange eine kontinuierliche Drehwinkelverstellung der Einlassnockenwelle zur Auslassnockenwelle bzw. zur Kurbelwelle der Brennkraftmaschine erfolgt, wird lediglich die Ventilhubkurve insgesamt in Richtung "früh" oder "spät" verschoben. Die Winkelgeschwindigkeit der Nockenwelle ist, bis auf den eigentlichen Verstellvorgang, wie anhand der punktierten Geraden C im Diagramm dargestellt, konstant.

Im nachfolgenden wird nunmehr das erfindungsgemäße Regelverfahren zur Verkürzung bzw. Verlängerung der Ventilöffnungsdauer mit Hilfe des Nockenellenverstellers näher beschrieben. Das Verfahren bietet sich insbesondere dann an, wenn die Brennkraftmaschine mit dem kleinen Ventilhub betrieben wird, da die Grundkreisphase der "kleinen Nocken" besonders lang ist.

### 1. Verkürzung der Ventilhubkurve

Hier erfolgt während eines Ventilhubes eine positive Beschleunigung der Einlassnockenwelle um den Betrag Δϕ, während im sich daran anschließenden Grundkreis die Rückstellung bzw. Korrektur der Drehwinkellage der Nockenwelle um den Betrag Δϕ, erfolgt. Dieser Vorgang wiederholt sich, solange die Ventilöffnungsdauer für den betreffenden Betriebszustand der Brennkraftmaschine gegenüber der "normalen" Ventilöffnungsdauer, die durch den Ventilnocken vorgegeben ist, reduziert werden soll. Damit ist die im Diagramm dargestellte Ventilöffnungskurve D erzeugbar. Korrespondierend zur Ventilöffnungskurve D ist mit der Kurve E die Winkelgeschwindigkeit der Nockenwelle dargestellt, woraus ersichtlich ist, dass während des Ventilhubs eine positive Beschleunigung der Nockenwelle erfolgt, während in der Grundkreisphase des betreffenden Nockens durch die Rückstellung eine negative Beschleunigung der Nockenwelle erfolgt.

### 2. Verlängerung der Ventilhubkurve

In diesem Fall erfolgt eine negative Beschleunigung der Nockenwelle um einen Betrag Δϕ während des Ventilhubs, während im Grundkreis die Nockenwelle um den Betrag Δϕ wieder korrigiert wird.

Das vorgeschlagene Regelverfahren ermöglicht die Umsetzung einer weiteren Ventilhubgeometrie mit der gleichen Nockenform. Eine Beeinflussung der Ventilhubkurve ist insbesondere dann signifikant, wenn mit dem Nockenwellenversteller eine hohe Verstellgeschwindigkeit umsetzbar ist. Dazu bieten sich insbesondere auch die aus dem Stand der Technik bekannten elektrisch ansteuerbaren Nockenwellenversteller an. Das vorbeschriebene Regelverfahren ist, wie bereits eingangs erwähnt, ohne Einschränkung auf diese Ausführungsform insbesondere für einen zweireihigen 6 - Zylinder - Motor geeignet, da die beispielsweise beim Porsche Boxer- Motor verwendete Zündreihenfolge 1 - 6 - 2 - 4 - 3 - 5 eine Symmetrie in der Zündfolge pro Zylinderbank erzeugbar ist und somit eine gleichmäßige Aufteilung von Ventilhub und Grundkreisphase auf der Nockenwelle gewährleistet ist. Das Regelverfahren ist ebenso auf der Auslassseite der Brennkraftmaschine einsetzbar, wobei die Auslassnockenwelle in diesem Fall auch mit einem entsprechenden Nockenwellenversteller versehen ist.

## Patentansprüche

1. Verfahren zum Verändern der Ventilsteuerzeiten einer Brennkraftmaschine, mit mindestens einer Nockenwelle und auf der Nockenwelle drehwinkelversetzt zueinander angeordneten Nocken, die unter Zwischenschaltung entsprechender Nockenfolgeelemente, wie z. B. Tassenstößel etc., mit ein- oder Auslassventilen der Brennkraftmaschine zusammenwirken, sowie mit einem an der Nockenwelle angeordneten Nockenwellenversteller, durch den die Position bzw. Drehlage der Nockenwelle zur Kurbelwelle veränderbar ist, **dadurch gekennzeichnet, dass**
a) zur Verkürzung der Ventilöffnungsdauer während eines Ventilhubs eine positive Beschleunigung der Nockenwelle erfolgt, während in der daran sich anschließenden Grundkreisphase des betreffenden Nockens eine negative Beschleunigung der Nockenwelle erfolgt, oder
b) zur Verlängerung der Ventilöffnungsdauer während eines Ventilhubs eine negative Beschleunigung der Nockenwelle erfolgt, während in der daran sich anschließenden Grundkreisphase des betreffenden Nockens eine positive Beschleunigung erfolgt.

2. Verfahren nach Anspruch 1, **gekennzeichnet durch** die Verwendung bei einem zweireihigen 6 - Zylinder - Motor mit symmetrischer Zündfolge pro Zylinderbank.

3. Verfahren nach Anspruch 1 oder 2, **gekennzeichnet durch** die Verwendung bei einer Brennkraftmaschine, die mit einer Einrichtung zur Ventilhubumschaltung versehen ist.

## Claims

1. Method for varying the valve control times of an internal combustion engine, with at least one camshaft and with cams which are arranged so as to be offset in relation to one another in respect of angle of rotation on the camshaft and which cooperate with inlet or outlet valves in the internal combustion engine, corresponding cam follower elements, such as, for example, bucket tappets, etc., being interposed, and also with a camshaft adjuster which is arranged on the camshaft and by means of which the position or rotary situation of the camshaft with respect to the crankshaft can be varied, **characterized in that**,
a) to shorten the valve opening duration during a valve stroke, a positive acceleration of the camshaft takes place, while, in the subsequent base-circle phase of the respective cam, a negative acceleration of the camshaft takes place, or,
b) to lengthen the valve opening duration during a valve stroke, a negative acceleration of the camshaft takes place, while, in the subsequent base-circle phase of the respective cam, a positive acceleration takes place.

2. Method according to Claim 1, **characterized by** use in a double-row six-cylinder engine with a symmetrical ignition sequence per cylinder bank.

3. Method according to Claim 1 or 2, **characterized by** use in an internal combustion engine which is provided with a device for valve-stroke changeover.

## Revendications

1. Procédé pour faire varier les temps de commande de soupape d'un moteur à combustion interne, comprenant au moins un arbre à cames et des cames disposées de manière décalées angulairement les unes des autres sur l'arbre à cames, qui coopèrent par l'intermédiaire d'éléments suiveurs de came correspondants, comme par exemple des poussoirs à coupelle, etc., avec des soupapes d'admission ou d'échappement du moteur à combustion interne, et comprenant aussi un déphaseur d'arbre à cames disposé sur l'arbre à cames, qui permet de modifier la position ou la position angulaire de l'arbre à cames par rapport au vilebrequin, **caractérisé en ce que**
a) pour raccourcir la durée d'ouverture des soupapes pendant une levée de soupape, une accélération positive de l'arbre à cames a lieu, tandis que dans la phase suivante de cercle de base de la came concernée, une accélération négative de l'arbre à cames a lieu, ou
b) pour prolonger la durée d'ouverture des soupapes pendant une levée de soupape, une accélération négative de l'arbre à cames a lieu, tandis que dans la phase suivante de cercle de base de la came concernée, une accélération positive a lieu.

2. Procédé selon la revendication 1, **caractérisé par** l'utilisation dans un moteur à 6 cylindres en deux rangées, avec une séquence d'allumage symétrique par rangée de cylindres.

3. Procédé selon la revendication 1 ou 2, **caractérisé par** l'utilisation dans un moteur à combustion interne qui est pourvu d'un dispositif d'inversion de la levée des soupapes.
